# EUROPEAN PATENT APPLICATION

(11) **EP 4 670 906 A1**
(43) Date of publication of application: **31.12.2025**
(21) Application number: 25180278.1
(22) Date of filing: 02.06.2025
(51) Int. Cl.: B23Q 3/06, B24B 41/06, B24B 45/00, B24D 5/16, B25B 5/10, B27B 5/29, B27B 5/30

(54) **STEAM TURBINE SEAL RING FINISHING APPARATUS AND METHOD OF USE**

(30) Priority: 26.06.2024 US 202418754915
(71) Applicant: GE Vernova Technology GmbH, 5400 Baden (CH)
(72) Inventor: MENDOZA, Jesus, 76146 Queretaro (MX); VITRONE, Christen A., Schenectady, 12345 (US); ALPIZAR, Ruben Omar, 76146 Queretaro (MX)
(74) Representative: Rüger Abel Patentanwälte PartGmbB

(57) **Abstract**

A finishing apparatus enables an outer diameter of a seal ring to be reduced. The finishing apparatus includes a first plate including a first peripheral angled surface, and a second plate including a second peripheral angled surface. The second peripheral angled surface is spaced a distance from the first peripheral angled surface when the finishing apparatus is assembled. The first and second peripheral angled surfaces define at least a portion of a wedge-shaped receiving cavity that is shaped complementary to a shape of an inner diameter of the seal ring to facilitate securing the seal ring in position relative to the finishing apparatus while the outer diameter of the seal ring is finished to a pre-determined size.

## Description

### BACKGROUND OF THE INVENTION

The field of the invention relates generally to steam turbines, and more specifically to an apparatus and method for on site finishing of steam turbine seal rings for internal valve component maintenance or replacement.

Steam turbines are well known power generation devices that convert thermal energy to mechanical energy in the generation of electrical power. In operation, high-pressure and high-temperature steam is input from an inlet to the steam turbine through main stop and control valves. Components of the main stop and control valves sometimes need to maintained and/or replaced during a planned outage of the steam turbine, including but not limited to, seal rings located in a valve casing. The seal rings require an outer diameter for the installation that very closely matches an inner diameter of the valve casing. Currently, seal rings are provided with an over-sized outer diameter (i.e., a diameter larger than the inner diameter of the valve casing), and the outer diameter the seal ring is reduced or finished on site to enable it to substantially match, i.e., be reduced to, the actual inner diameter of the valve casing where the seal ring is to be installed in the steam turbine.

Known finishing apparatus and methods used to reduce the desired outer diameter of seal rings in a customized manner to ensuring a proper fit and therefore a proper seal at the point of installation in a valve casing of a steam turbine are disadvantaged in some aspects, and improvements are desired. For example, because of the overall size of at least some seal rings, securing the seal ring in a position that enables the outer diameter ring to be machined may be difficult. In addition, because of the angled surfaces of the seal ring, machining the seal ring using known finishing machinery. Accordingly, a need exists for a system and methods for on site finishing of steam turbine seal rings in a cost effective and less labor-intensive manner as compared to known finishing machinery.

### BRIEF DESCRIPTION OF THE INVENTION

In one aspect, a finishing apparatus for use in reducing an outer diameter of a seal ring is provided. The finishing apparatus includes a first plate including a first peripheral angled surface, and a second plate including a second peripheral angled surface. The second peripheral angled surface is spaced a distance from the first peripheral angled surface when the finishing apparatus is assembled. The first and second peripheral angled surfaces define at least a portion of a wedge-shaped receiving cavity that is shaped complementary to a shape of an inner diameter of the seal ring to facilitate securing the seal ring in position relative to the finishing apparatus while the outer diameter of the seal ring is finished to a pre-determined size.

In another aspect, a method for finishing a seal ring for on-site installation to a valve casing is provided. The method includes determining a finished outer diameter of the seal ring to facilitate a seal between the valve casing and the finished seal ring within a predetermined tolerance, and coupling the seal ring within a finishing apparatus that includes a first plate and a second plate that are positioned such that at least a portion of the seal ring is received between the first and second plates. The method also includes clamping the seal ring between the first and second plates such that a portion of the seal ring is received within a cavity having a shape that is complimentary to a shape defined between the first and second plates, and such that a portion of the seal ring extends radially outwardly from a circumferential outer edge of each of the first and second plates, and reducing the outer diameter of the seal ring to the finished diameter.

In yet another aspect, a finishing apparatus for use in finishing a seal ring is provided. The finishing apparatus includes a substantially planar first plate defined by an outer edge including a first angled surface, and a substantially planar second plate defined by an outer edge including a second peripheral angled surface that substantially mirrors the first angled surface such that a triangular cavity is defined between the first and second peripheral angle surfaces when the finishing apparatus is assembled. The triangular cavity is oriented to substantially center the seal ring relative to the finishing apparatus such that a portion of the seal ring is retained between the first and second peripheral angled surfaces while a portion of the seal ring extends radially outward from the first and second peripheral surfaces when the finishing apparatus is assembled.

### BRIEF DESCRIPTION OF THE DRAWINGS

Fig. 1 is a schematic illustration of an exemplary turbomachine in which seal rings may be installed.
Fig. 2 is a sectional view of an exemplary valve assembly including an exemplary seal ring that may be used with the turbomachine shown in Figure 1.
Fig. 3 is an exploded view of an exemplary seal ring finishing apparatus for use in reducing an outer diameter of the seal ring for optimal installation in the valve assembly shown in Fig. 2.
Fig. 4 is a top perspective view of the finishing apparatus shown in Fig. 3 with a portion of the seal ring clamped thereto.
Fig. 5 is a sectional view of the finishing apparatus shown in Fig. 4 with the seal ring clamped thereto.
Fig. 6 is a top view of a first portion of the finishing apparatus shown in Figs. 3-5.
Fig. 7 is a side elevational view of the first portion of the finishing apparatus shown in Fig. 6.
Fig. 8 is a top view of the second portion of the finishing apparatus shown in Figs. 3-5.
Fig. 9 is a sectional view of the second portion of the finishing apparatus shown in Fig. 9.

### DETAILED DESCRIPTION OF THE INVENTION

Known oversized replacement seal rings present certain challenges in the installation of the seal rings to valve casings within a turbomachine, such as a steam turbine, on the high-pressure side of the turbomachine. Specifically, the overall size and shape of the oversized seal ring complicates any attempt to reduce an outer diameter of the seal ring to match an inner diameter of the valve casing at the site of the turbomachine during a planned turbine shutdown or turbine outage. Existing finishing apparatus and processes for reducing the outer diameter of the seal ring present difficulties in meeting the required tolerances for the installation, and as a result some trial and error may be encountered in completing installation of the seal ring properly. Such trial and error undesirably introduce time delay in completing the installation of the seal rings and/or undesirable scrapping of seal rings that do not meet the required tolerances due to difficulties encountered in reducing the outer diameter of the seal rings. Finishing apparatus and methods are accordingly described herein that address and overcome such issues. Method aspects are in part explicitly described and in part are implicitly disclosed in the following description.

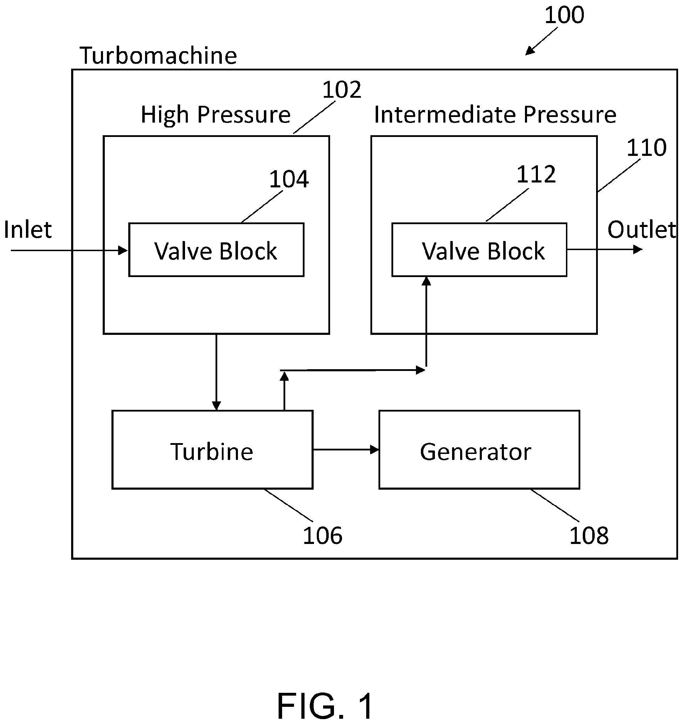

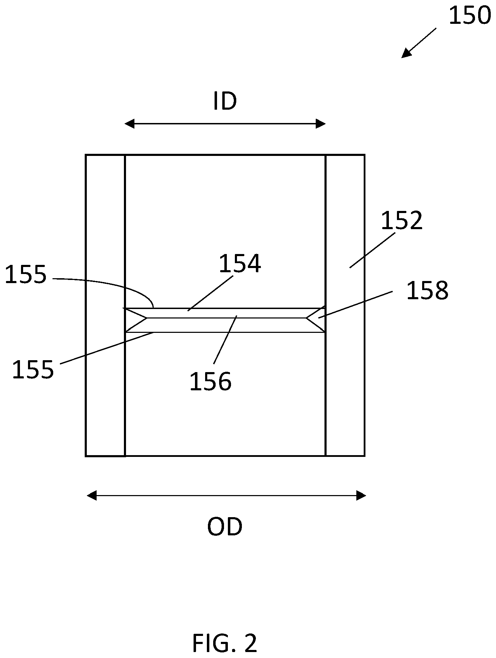

Fig. 1 schematically illustrates a portion of an exemplary turbomachine 100 in which exemplary seal rings (shown in Fig. 2) may be installed that need to be finished on site prior to installation. In the exemplary embodiment, the turbomachine 100 includes a high-pressure portion 102 that receives steam from one or more inlets, and one or more valve blocks 104 that enable the steam to be output to a turbine 106 used to converts thermal energy of the steam to rotational energy that is then channeled to an electrical power generator 108, for example. In the exemplary embodiment, the valve block 104 includes multiple valves whose outputs may be combined prior to supplying the steam to the turbine 106. For example, the valves in the valve block 104 may operate as main stop valves or control valves during operation of the turbomachine 100.

In the example shown, the turbomachine 100 also includes an intermediate-pressure portion 110 including one or more valve blocks 112 that receive steam from the turbine 106 and direct the steam to an outlet. Optionally, the turbomachine may include a low-pressure portion (not shown) that includes one or more valve blocks prior to the steam exiting the turbomachine 100. The intermediate-pressure valve block 112 and/or a low-pressure valve block may likewise include multiple valves that operate as stop valves or control valves. Outputs from the valves in the intermediate-pressure valve block 112 and/or from a low-pressure valve block may be combined prior to steam exiting the turbomachine.

As the fabrication, assembly, and operation of the turbomachine 100 is well known and understood by those in the art, further description thereof is omitted for the sake of brevity except for fabrication and illustration aspects of the finishing apparatus and seal rings. While the seal rings described below are perhaps most beneficially used for the valves included in the high-pressure valve block 104 in the high-pressure portion 102 of the turbomachine 100, the seal rings may likewise be used in any other valves that include a seal ring, including, but not limited to valves used in the intermediate-pressure valve block 112 of the intermediate-pressure portion 110, and/or valves associated with a low-pressure portion of the turbomachine 100 when provided. It is recognized, however, that the benefits of the apparatus and method described below to facilitate installation of the seal rings is not necessarily limited to the turbomachine described herein. As such, the apparatus and methodology described below may be beneficially applied to other seal ring applications presenting similar issues and/or in to any other application to which the benefits of the finishing apparatus and methods would be realized.

Fig. 2 is a sectional view of an exemplary portion of a valve assembly 150 including a valve casing 152 having a round and circular inner diameter (ID) and a round outer diameter (OD). The valve casing 152 may be provided, for example, in the valve block 104 of the turbomachine 100 (Fig. 1) or within any of the other valve blocks described herein. The inner diameter ID defines a longitudinal and generally cylindrical opening, space or bore in which various steam valve components may reside and extend. In the exemplary embodiment, such steam valve components include at least a seal ring 154 having a round and circular outer diameter OD that is finished within a predefined tolerance limit to sealingly conform to the actual inner diameter ID of the valve casing 152. The seal ring 154 extends circumferentially adjacent to the inner diameter ID of the valve casing 152 for an entirety of the 360° circumference of the inner diameter ID.

In contemplated examples, the outer diameter OD of the seal ring 154 may be initially oversized by about 4 mm relative to the expected IDs of associated valve casings for the seal ring 154 installation. As such, in the exemplary embodiment, the outer diameter OD of the seal ring 154 may be finished to reduce the outer diameter OD to fit within a range of valve casing IDs that may be individually determined, confirmed or verified at the time of seal ring replacement and on-site at the actual valve. In some embodiments, sets of seal rings 154 may be provided that have different oversized initial diameters and that have a similar or different degree of oversizing to facilitate flexible fitting after finishing for use with different valves.

In the exemplary embodiment, the seal ring 154 includes a wedge-shaped or triangular-shaped cross-sectional portion 158 that is defined by inclined edge surfaces 155 that extend obliquely relative to the ID of the valve casing 152. Moreover, the seal ring 154 includes inwardly-depending edge surfaces 155 that extend from the outer diameter OD which in combination define a pointed leading end edge 156 that extends along an inner diameter of the seal ring. As such, the inner diameter ID of the seal ring 154 is non-uniform along the longitudinal axis of the valve casing 152. As shown in Fig. 2, the non-uniform inner diameter ID is defined along the triangular-shaped or wedge-shaped cross portion 158 of the seal ring 154 where the outer diameter OD meets the inner diameter ID of the valve casing 152. Specifically, the inner diameter ID of the seal ring 154 is smallest along the pointed end edge 156 and it expands above and below the pointed edge 156 substantially linearly towards to the outer diameter OD of the seal ring 154.

Unlike other types of seal rings that include opposed and flat surfaces that are generally parallel between the inner and outer diameters (these lend themselves to precise machining using relatively simple machining fixtures), the non-uniform inner diameter ID resulting from the wedge-shaped cross-sectional portion158 of the seal ring 154 does not include flat and parallel surfaces, making it difficult to reliably secure the seal ring 154, i.e., using clamps, from above and below within known finishing apparatuses and/or using known finishing methods that attempt to reduce its original, oversized outer diameter OD to a smaller diameter that is about the same size as the inner diameter ID of the valve casing 152. Consequently, such inability to securely clamp the seal ring 154 for finishing may increase the likelihood of errors in the desired result, and more specifically, may produce a machined seal ring that has an altered diameter, relative to its original oversized diameter, but that does not satisfy the required tolerances for the valve or for the associated turbomachine. As such, trial and error in the finishing of the seal ring 154 may accordingly result.

Because of trial and error attributable to challenges in reliably holding the seal rings while the oversized initial outer diameter OD of a seal ring 154 is reduced, costs of installation of the seal ring 154 tend to be increased and planned turbine outage times may be longer than originally anticipated. Additionally, some seal rings 154 may inevitably need to be scrapped when some or all of the outer diameter is inadvertently reduced too much to provide the necessary sealing. In such cases, that seal ring may need to be scrapped and finishing would need to start over on another seal ring to complete installation to the valve casing. Likewise, additional finishing of seal rings would be required when the oversized outer diameter OD has not been reduced enough. Such events may require planned turbine outages to be extended in order to complete the proper installation of the seal rings 154. Of course, such effects may accumulate depending on the number of valves in the valve blocks 104 and/or 112 (Fig. 1) that need replacement seal rings. Given the possibility that the outer diameter OD of different valve casings may vary slightly from one another, trial and error in successfully reducing the outer diameter of the seal rings for placement in different valve casings may be complicated even more so.

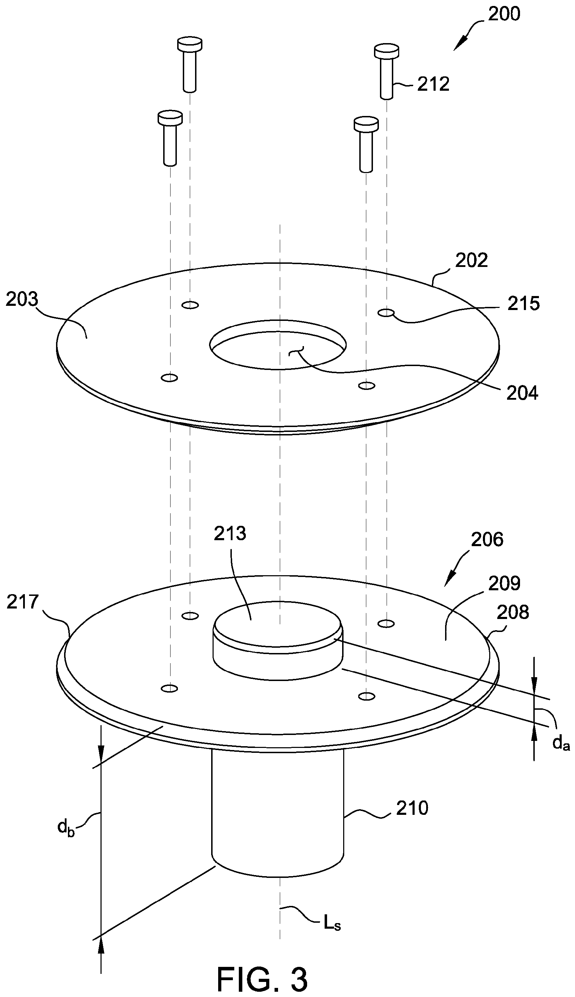

Fig. 3 is an exploded view of an exemplary seal ring finishing apparatus 200 which overcomes the aforementioned difficulties and efficiently facilitates an accurate and reliable reduction of the oversized initial outer diameter OD of the seal ring 154 for its proper installation in a particular valve assembly 150 (shown in Fig. 2). Using the finishing apparatus 200 and associated methodology, seal rings may accordingly be facilitated to be installed in the valve assembly 150 and turbomachine 100 in a reduced amount of time and with a reduced cost, while also beneficially reducing, if not eliminating, an amount of scrapped materials or a likelihood of extending the length of planned turbine outages necessary to complete valve component replacement.

As shown in Figs. 3-9, in the exemplary embodiment, the finishing apparatus 200 includes an upper portion 202 and a lower portion 206. The upper portion 202, in the exemplary embodiment, is in the form of a round and substantially circular plate 203 that includes a round and substantially circular central opening 204 defined therein that extends therethrough. The lower portion 206, in the exemplary embodiment, includes a round and substantially circular plate 208 and a substantially cylindrical shaft or stem 210 that extends through a round and circular central opening defined in the plate 208. The stem 210 extends a relatively short distance dₐ above the upper surface 209 of the plate 208 as shown and a longer distance d_{b} below the bottom surface 211of the plate 208. The longitudinal axis Lₛ of the stem 210 extends substantially perpendicularly to the upper and bottom surfaces 209 and 211, respectively, of the plate 208. Moreover, in the exemplary embodiment, the stem 210 and the plate 208 may be securely coupled together, such as via a welding process, and provided as a unitary assembly for use in the finishing of the seal ring 154.

The plate 203, in the exemplary embodiment, is separately provided and may be received over the protruding top end 213 of the stem 210 and securely fastened to the plate 208 over the seal ring 154. Fasteners 212 such as bolts or screws are insertable through fastener openings 215 and 217 defined in each respective plate 202 and 208 to enable the seal ring 154 to be securely fastened to the finishing apparatus 200. In the exemplary embodiment, four fasteners 212 and four fastener holes 215 and 217 are illustrated, with the fasteners and holes uniformly spaced from one another at about 90° radial positions from one another to provide a substantially uniform clamping force about the circumference of the seal ring 154. In alternative embodiments, any other fastening mechanism that enables the finishing apparatus 200 to function as described herein may be used. Moreover, in alternative embodiments, more or less than four fasteners 212 may be used as long as sufficient clamping force is provided to enable the seal ring 154 to be securely retained in position to facilitate efficient, accurate, and repeatable finishing of the outer diameter OD of the seal ring 154.

After the seal ring 154 is secured in position between the plates 203 and 208, the oversized initial outer diameter OD of the seal ring 154 protrudes circumferentially from the outer peripheral edges of the plates 203 and 208. The protruding outer diameter OD of the seal ring 154 may therefore be machined with a tool such as a lathe to finish and to reduce the outer diameter OD to fit the particular valve casing that the seal ring 154 is being installed. In one embodiment, the stem 210 may be coupled to and rotatable by the lathe to facilitate the machining. In another embodiment, any other appropriate machining tool may be rotated about the outer diameter OD of the seal ring 154 to reduce its outer diameter OD to match the inner diameter ID of the particular valve casing where the seal ring 154 is to be installed.

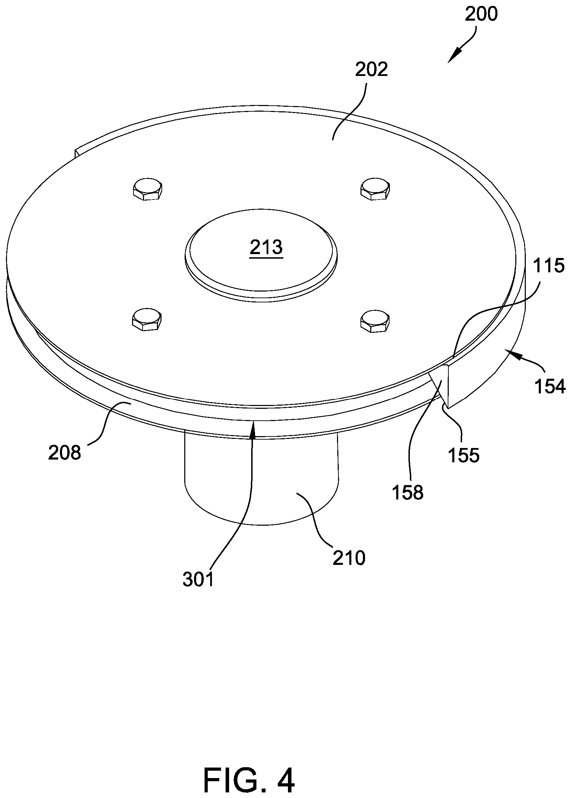

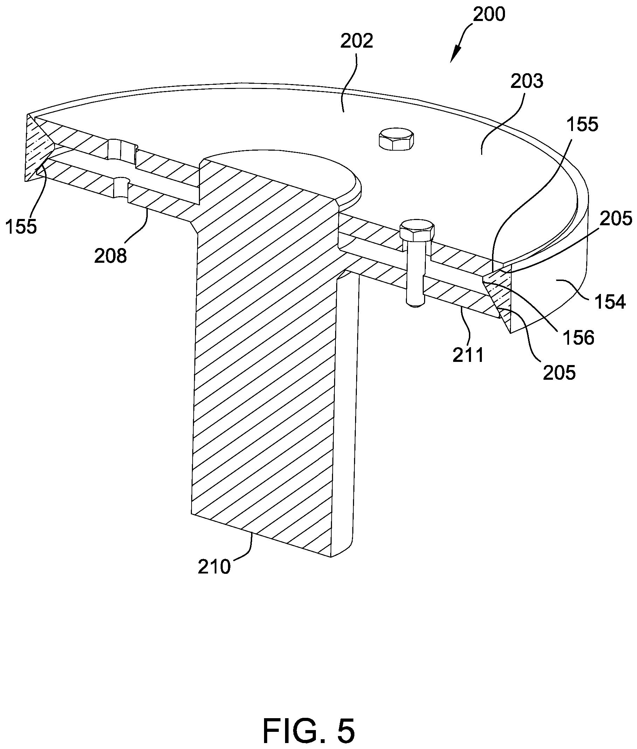

Fig. 4 is a top perspective view of the finishing apparatus 200 in assembled form and with a portion of the seal ring 154 shown clamped thereto. The angled surfaces defining the pointed inner edge 156 (Fig. 2 and Fig. 5) of the seal ring 154 are securely clamped between the plates 203 and 208, while the outer diameter OD of the seal ring 154 initially projects circumferentially outwardly beyond the peripheral circumferential edge of each plate 203 and 208 to enable machining to reduce the outer diameter OD of the diameter.

Fig. 5 is a sectional view of the finishing apparatus 200 illustrating that each of the upper and lower plates 203 and 208 includes an angled peripheral edge surface 205 that presses against one of the inner inclined edge surfaces 155 of the seal ring 154. The angled edge surfaces 305 of the plates 203 and 208 are opposite to one another (e.g., one has a positive slope while the other has a negative slope) such that a wedge-shaped receiving area 301 is defined between the spaced-apart plates 202 and 208. In the exemplary embodiment, the wedge-shaped receiving area 301formed substantially complements the wedge-shaped portion 158 defined within the seal ring 154, to facilitate stable positioning of the seal ring 154 in the apparatus 200 and to facilitate a substantially uniform compressing force is induced circumferentially to the seal ring 154 when retained within the finishing apparatus 200.

Moreover, when received in the apparatus 200 as shown, the seal ring 154 is substantially centered within the apparatus 200 and may be securely retained within the apparatus via the fasteners 212 applying a substantially uniform compressive force upon the wedge-shaped portion 158 of the seal ring 154. The pointed edge 156 of the inner seal ring 154 extends between the angled edge surfaces 205 of the plates 203 and 208, while the wedge-shaped portion 158 of the seal ring 154 is clamped with a sufficient compressive force.

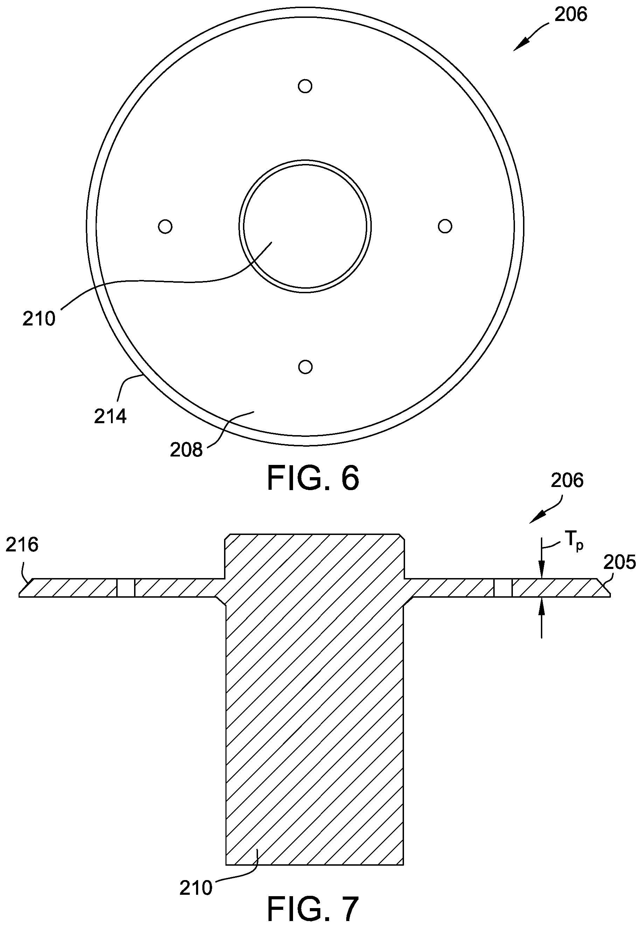

Fig. 6 is a top view of the lower portion 206 of the finishing apparatus 200 shown in Figs. 3-5 and Fig. 7 is a side elevational view of the lower portion 206 of the finishing apparatus shown 200. The plate 208 in the lower portion 206 includes a peripheral edge 214 that includes an angled edge 216 defined by an inclined surface 205. Other than along these surfaces 205, the plate 208 is otherwise substantially planar and has a substantially uniform thickness Tₚ. The angled surface 205 receives the lower side of the wedge-shaped portion 158 of the seal ring 154 when the seal ring 154 is placed on top of the plate 208. Because the angled edge 216 aligns with the lower angle of the wedge-shaped portion 158, in the exemplary embodiment, the seal ring 154 is easily and intuitively guided to a substantially centered position with respect to the plate 208.

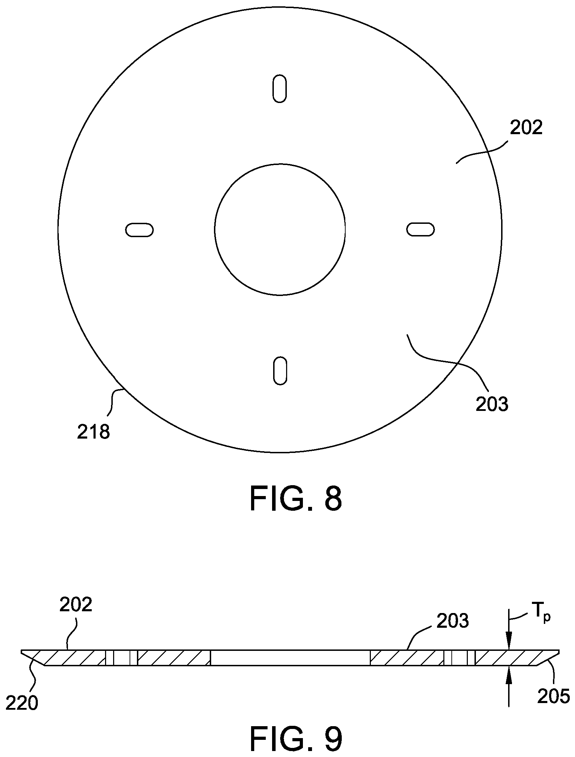

Fig. 8 is a top view of the upper portion 202 of the finishing apparatus 200 and Fig. 9 is a sectional view of the upper portion 202 of the apparatus 200. The plate 203 includes a peripheral edge 220 that is defined by an angled or inclined surface 205. Other than along these surfaces 205, the plate 203 is otherwise substantially planar and has a substantially uniform thickness tₚ. The angled surface 205 receives the upper side of the wedge-shaped cross-sectional portion 158 of the seal ring 154 when the plate 203 is placed over the top of the seal ring 154. Since the angled surface 205 substantially aligns with the seal ring wedge-shaped cross-sectional portion 158, the plate 203 is easily and intuitively guided to a centered position with respect to the seal ring 154. The insertion of the plate 203 over the stem 210 further centers the plate 203 and the seal ring 154 relative to the plate 208 prior to insertion of the fasteners 212 when the fastener holes in the plates 203 and 208 are aligned.

The substantially uniform outer diameters of the plates 203 and 208 further provide a visual guide to verify that the seal ring 154 is substantially centered as the seal ring 154 is clamped to the apparatus 200 via insertion and tightening of the fasteners 212. After being securely clamped, the oversized initial outer diameter OD of the seal ring 154 can be efficiently and reliably reduced to the determined and desired size that matches the determined size of the valve casing inner diameter ID. After being finished to the correct size, the fasteners 212 are removed, enabling the plate 203 to be removed to access the finished seal ring 154 for assembly with the valve casing 152.

Different sets of finishing apparatus 200 may be provided to accommodate different oversized diameters of seal rings as desired or as needed with otherwise similar structure and methodology to finish and install the seal rings.

The benefits and advantages of the inventive finishing apparatus and methods are now believed to have been amply illustrated in relation to the exemplary embodiments disclosed.

Exemplary systems and methods of finishing seal rings on site in a cost effective and reliable manner are described herein. A finishing apparatus and methods of use are accordingly described herein that address and overcome issues associated with known finishing apparatuses and known methods of finishing seal rings. Moreover, the systems and methods described use an assembly that applies a substantially constant compressive force to an oversized seal ring that requires finishing on site of the valve casing to which the seal ring is being installed. The assembly secures the seal ring in a manner that ensures the seal ring is substantially centered and is secured. The exemplary systems and methods as described herein provide several advantages over conventional designs and processes, including reducing time delays in reducing the diameter of the oversized seal ring, and reducing costs and time delays associated with installation of seal rings, for example.

The above description is meant to be exemplary only, and one skilled in the art will recognize that changes may be made to the embodiments described without departing from the scope of the invention disclosed. Modifications, which fall within the scope of the present invention, will be apparent to those skilled in the art, in light of a review of this disclosure, and such modifications are intended to fall within the appended claims. The systems described herein are not limited to the specific embodiments described herein, but rather portions of the various systems may be utilized independently and separately from other systems described herein.

Although specific features of various embodiments of the invention may be shown in some drawings and not in others, this is for convenience only. Moreover, references to "one embodiment" in the above description are not intended to be interpreted as excluding the existence of additional embodiments that also incorporate the recited features. In accordance with the principles of the invention, any feature of a drawing may be referenced and/or claimed in combination with any feature of any other drawing.

Further aspects of the invention are provided by the subject matter of the following clauses:

A finishing apparatus for use in reducing an outer diameter of a seal ring, wherein the finishing apparatus includes a first plate including a first peripheral angled surface, and a second plate including a second peripheral angled surface that is spaced a distance from the first peripheral angled surface when the finishing apparatus is assembled, wherein the first and second peripheral angled surfaces define at least a portion of a wedge-shaped receiving cavity that is shaped complementary to a shape of an inner diameter of the seal ring to facilitate securing the seal ring in position relative to the finishing apparatus while the outer diameter of the seal ring is finished to a pre-determined size.

The finishing apparatus in accordance with any of the preceding clauses, wherein the apparatus further includes a stem extending from an upper surface of the first plate, wherein the stem cooperates with the first and second peripheral angle surfaces to facilitate self-centering of the seal ring with respect to the finishing apparatus.

The finishing apparatus in accordance with any of the preceding clauses, wherein the second plate further includes a central opening sized to receive a portion of the stem therethrough.

The finishing apparatus in accordance with any of the preceding clauses, further including a plurality of fastening mechanisms extending through a plurality of holes defined in the first and second plates, wherein the fasteners facilitate securing the seal ring within the finishing apparatus.

The finishing apparatus in accordance with any of the preceding clauses, wherein the plurality of fastening mechanisms are spaced circumferentially to enable a substantially constant compressive force to be induced to the seal ring.

The finishing apparatus in accordance with any of the preceding clauses, wherein the finishing tool enables a lathe to reduce an outer diameter of the seal ring.

The finishing apparatus in accordance with any of the preceding clauses, wherein the stem is rotatable with respect to the tool.

A method for finishing a seal ring for on-site installation to a valve casing, wherein the method includes determining a finished outer diameter of the seal ring to facilitate a seal between the valve casing and the finished seal ring within a predetermined tolerance, coupling the seal ring within a finishing apparatus that includes a first plate and a second plate that are positioned such that at least a portion of the seal ring is received between the first and second plates clamping the seal ring between the first and second plates such that a portion of the seal ring is received within a cavity having a shape that is complimentary to a shape defined between the first and second plates, and such that a portion of the seal ring extends radially outwardly from a circumferential outer edge of each of the first and second plates, and reducing the outer diameter of the seal ring to the finished diameter.

The method in accordance with any of the preceding clauses, wherein clamping the seal ring further comprises seating a wedge-shaped portion of the inner diameter of the seal ring within a triangular shaped cavity defined by the first and second plates, and securing the first plate to the second plate such that a stem extending substantially perpendicularly from the second plate extends a distance through an opening defined in the first plate.

The method in accordance with any of the preceding clauses, further including inserting fasteners through holes defined in the first and second plates to induce a compressive force above and below the wedge-shaped portion of the seal ring.

The method in accordance with any of the preceding clauses, wherein reducing the oversized outer diameter to the finished diameter includes using a finishing tool to facilitate reducing the outer diameter of the seal ring to a finished diameter while the seal ring is retained within the finishing apparatus.

The method in accordance with any of the preceding clauses, wherein using a finishing tool further includes using a lathe to facilitate reducing the outer diameter of the seal ring.

The method in accordance with any of the preceding clauses, further including rotating the stem relative to the finishing tool.

The method in accordance with any of the preceding clauses, further including rotating the finishing tool relative to the finishing apparatus.

The method in accordance with any of the preceding clauses, further including installing the finished seal ring to the valve casing.

A finishing apparatus for use in finishing a seal ring, wherein the finishing apparatus includes a substantially planar first plate defined by an outer edge including a first angled surface, and a substantially planar second plate defined by an outer edge including a second peripheral angled surface substantially mirrors the first angled surface such that a triangular cavity is defined between the first and second peripheral angle surfaces when the finishing apparatus is assembled, wherein the triangular cavity is oriented to substantially center the seal ring relative to the finishing apparatus such that a portion of the seal ring is retained between the first and second peripheral angled surfaces while a portion of the seal ring extends radially outward from the first and second peripheral surfaces when the finishing apparatus is assembled.

The finishing apparatus in accordance with any of the preceding clauses wherein the portion of the seal ring retained between the first and second peripheral angled surfaces is shaped complementary to shape of the triangular cavity defined between the first and second peripheral angled surfaces.

The finishing apparatus in accordance with any of the preceding claims further including a plurality of fastening mechanisms sized to extend through a plurality of holes defined in the first and second plates, wherein the fasteners facilitate securing the seal ring within the finishing apparatus such that a substantially constant compressive force is induced to the seal ring.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A finishing apparatus for use in reducing an outer diameter of a seal ring, wherein the finishing apparatus comprises:
a first plate including a first peripheral angled surface; and
a second plate including a second peripheral angled surface that is spaced a distance from the first peripheral angled surface when the finishing apparatus is assembled, wherein the first and second peripheral angled surfaces define at least a portion of a wedge-shaped receiving cavity that is shaped complementary to a shape of an inner diameter of the seal ring to facilitate securing the seal ring in position relative to the finishing apparatus while the outer diameter of the seal ring is finished to a predetermined size.

2. The finishing apparatus of Claim 1, further comprising a stem extending from an upper surface of the first plate, the stem cooperating with the first and second peripheral angle surfaces to facilitate self-centering of the seal ring with respect to the finishing apparatus.

3. The finishing apparatus of Claim 2, wherein the second plate further includes a central opening sized to receive a portion of the stem therethrough.

4. The finishing apparatus of Claim 3, further comprising a plurality of fastening mechanisms extending through a plurality of holes defined in the first and second plates, wherein the fasteners facilitate securing the seal ring within the finishing apparatus.

5. The finishing apparatus of Claim 4, wherein the plurality of fastening mechanisms are spaced circumferentially to enable a substantially constant compressive force to be induced to the seal ring.

6. The finishing apparatus of Claim 5, wherein the finishing tool enables a lathe to reduce an outer diameter of the seal ring.

7. The finishing apparatus of Claim 5, wherein the stem is rotatable with respect to the tool.

8. A method for finishing a seal ring for on-site installation to a valve casing, the method comprising:
determining a finished outer diameter of the seal ring to facilitate a seal between the valve casing and the finished seal ring within a predetermined tolerance;
coupling the seal ring within a finishing apparatus that includes a first plate and a second plate that are positioned such that at least a portion of the seal ring is received between the first and second plates;
clamping the seal ring between the first and second plates such that a portion of the seal ring is received within a cavity having a shape that is complimentary to a shape defined between the first and second plates, and such that a portion of the seal ring extends radially outwardly from a circumferential outer edge of each of the first and second plates; and
reducing the outer diameter of the seal ring to the finished diameter.

9. The method of Claim 8, wherein clamping the seal ring further comprises:
seating a wedge-shaped portion of the inner diameter of the seal ring within a triangular shaped cavity defined by the first and second plates; and
securing the first plate to the second plate such that a stem extending substantially perpendicularly from the second plate extends a distance through an opening defined in the first plate.

10. The method of Claim 9, further comprising inserting fasteners through holes defined in the first and second plates to induce a compressive force above and below the wedge-shaped portion of the seal ring.

11. The method of Claim 8, wherein reducing the oversized outer diameter to the finished diameter comprises using a finishing tool to facilitate reducing the outer diameter of the seal ring to a finished diameter while the seal ring is retained within the finishing apparatus.

12. The method of Claim 11, wherein using a finishing tool further comprises using a lathe to facilitate reducing the outer diameter of the seal ring.

13. The method of Claim 11, further comprising rotating the stem relative to the finishing tool.

14. The method of Claim 11, further comprising rotating the finishing tool relative to the finishing apparatus.

15. The method of Claim 14, further comprising installing the finished seal ring to the valve casing.
